Europäisches Patentamt

European Patent Office

Office européen des brevets

(19)

(11) **EP 0 551 627 B1**

(12) **EUROPEAN PATENT SPECIFICATION**

(45) Date of publication and mention
of the grant of the patent:
**27.03.1996 Bulletin 1996/13**

(51) Int Cl.6: **H02P 5/418**

(21) Application number: **92121439.1**

(22) Date of filing: **17.12.1992**

(54) **Motor speed control circuit**

Motorgeschwindigkeitsregelkreis

Circuit de régulation de la vitesse d'un moteur

(84) Designated Contracting States:
**DE GB IT**

(30) Priority: **14.01.1992 FR 9200320**

(43) Date of publication of application:
**21.07.1993 Bulletin 1993/29**

(73) Proprietor: **MOTOROLA SEMICONDUCTEURS
S.A.**
**F-31023 Toulouse Cédex (FR)**

(72) Inventor: **Ollitrault, Stephen**
**F-31600 Seysses (FR)**

(74) Representative: **Hudson, Peter David et al**
**Motorola**
**European Intellectual Property**
**Midpoint**
**Alencon Link**
**Basingstoke, Hampshire RG21 7PL (GB)**

(56) References cited:
**EP-A- 0 033 353        EP-A- 0 247 650**
**DE-A- 3 629 826**

## Description

Field of the Invention

This invention relates to a motor speed control circuit. The invention particularly relates to a motor speed control circuit for use in a motor speed regulation loop for a washing machine, dryer or similar device.

Background of the Invention

Speed regulation loops for universal motors are known, for example, from EP-A-523371, published on 20/1/93. The loop comprises a ramp generator for providing a signal, which is representative of the speed, to a first input of an error amplifier. The output of the error amplifier controls a pulse generator which fires a triac. The triac drives a universal motor with tacho generator whose output frequency is proportional to the motor speed and is fed to a frequency to voltage converter. The output of the frequency to voltage converter, actual speed voltage, is then fed to the second input of the error amplifier. The ramp generator therefore generates a ramp voltage in order to control the motor speed and motor acceleration rate.

In washing machine applications for example, there are generally three segments requiring different acceleration rates and speeds: the wash segment corresponding to low speeds but high acceleration, the distribution segment corresponding to medium speeds with low and accurate acceleration and the spin-drying segment for high speeds and again high acceleration. Thus, the ramp generator must provide three different ramp voltage signals corresponding to the three segments. Furthermore, the ramp voltage must be able to provide a deceleration from any segment to any other one and then be ready for further acceleration or deceleration. The segment limits, the distribution acceleration and the maximum speed are determined, according to the application, by analog voltages applied to the ramp generator. These analog voltages are supplied by voltage sources external to the speed regulation loop.

One way of providing the above described functions is to use an electrolytic capacitor which is separate to the integrated circuit containing the speed regulation loop and whose charging and discharging is controlled in response to the external analog voltage signals applied to the loop. In order to charge or discharge the capacitor, the ramp generator must generate an internal current. However, for integrated circuits the accuracy of such a current is limited by process variations. Furthermore, the tolerance of the electrolytic capacitor itself can significantly reduce the accuracy of the acceleration rates. Thus, such an arrangement provides good flexibility for changing between segments but poor accuracy for the different acceleration rates.

The accuracy is improved if the ramp generator, error amplifier and frequency to voltage converter are replaced by a microprocessor. However, this significantly increases the complexity and cost of the speed regulation loop.

Summary of the Invention

In accordance with the present invention there is provided a speed control circuit for a motor operable at selectable speeds and selectable acceleration rates, the speed control circuit comprising:

an output node for providing a control signal to be applied to the motor representative of the motor speed and acceleration;
a clocked counter;
a digital-to-analog (D/A) converter coupled to the counter for providing a signal to the output node which is adjusted in steps in response to the count of the counter;
step control means coupled to the D/A converter for controlling the size of the steps in response to a step control signal applied to an input thereof whereby the step size determines the acceleration rate of the motor; and
speed control means coupled to the clocked counter and to the output node and having an input for receiving a speed control signal having a value corresponding to a predetermined speed, the speed control means for detecting when the control signal at the output node is equal to the speed control signal, and in response thereto for resetting the clocked counter and for providing a signal representative of the predetermined speed to the output node which is combined thereat with the signal from the digital-to-analog converter.

An advantage of the present invention is that it allows for more accurate acceleration since the step size of the D/A converter, which determines the slope and hence the acceleration of the output control signal, can be accurately controlled by the step control means. Furthermore, the invention provides a flexible system since the speed limits can be easily set. The invention uses both digital signals and analog signals to generate the output control signal but without utilising complex and expensive digital circuitry.

Preferably, the speed control means comprises step switch means and wherein the step control means comprises an analog loop having an input coupled to receive the step control signal, an enable input coupled to the step switch means and an output coupled to the D/A converter, the analog loop being switchable between a first disabled state in which it sets the step size to a first value and a second enabled state in which the analog loop sets the step size to a second value, the step switch means providing a signal to the enable input of the analog loop to switch the analog loop to the second state when the control signal at the output node is equal to the speed control signal.

In a preferred arrangement the speed control circuit further comprises clock control means having a first input for receiving a third speed control signal representative of a third predetermined speed limit, a second input for receiving the control signal at the output node, a first output coupled to the output node and a second output coupled to the clocked counter, whereby the clock control means detects when the control signal is equal to the third speed control signal and in response thereto sends a stop clock signal to the counter to disable the counter and maintains the control signal at the output node at the third predetermined speed limit.

An advantage of this preferred structure is that the output control signal can be accurately clamped to the third predetermined speed limit.

Preferably, the clock control means comprises an operational amplifier having first and second inputs coupled respectively to the first and second inputs of the clock control means and an output, and a multi-collector transistor having a base coupled to the output of the operational amplifier, a first collector coupled to the output node, a second collector coupled to the clocked counter and a third collector.

The speed control circuit may further comprise deceleration control means having a first input coupled to the first input of the clock control means, an enable input coupled to the third collector of the clock control means and an output coupled to the output node, a fourth speed control signal representative of a fourth predetermined speed limit which is less than the third predetermined speed limit is applied to the first inputs of the deceleration control means and the clock control means to initiate a deceleration whereby the current flowing in the third collector changes, when the current reaches a predetermined level the deceleration control means is enabled such that the control signal at the output node is pulled to the fourth predetermined speed limit.

The deceleration control in accordance with the preferred structure allows for direct deceleration from one predetermined speed to another defined by the fourth speed control signal.

Brief Description of the Drawings

A preferred embodiment of the present invention will now be described, by way of example only, with reference to the accompanying drawings in which:

Figure 1 is a block schematic diagram of a prior art speed regulation loop for a washing machine;
Figure 2 is a diagrammatic representation of the ramp voltage signal for different segments of a washing machine's operation;
Figure 3 is a circuit diagram of a motor speed control circuit in accordance with the present invention; and
Figure 4 is a diagrammatic representation of the ramp signal provided by the digital-to-analog converter of Figure 3.

Detailed Description

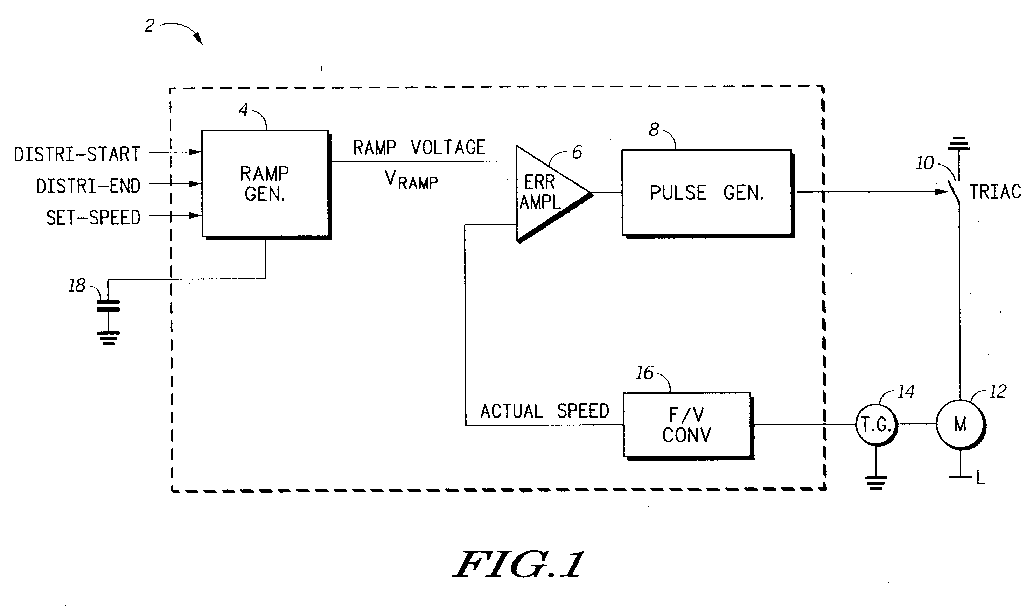

Referring firstly to Figure 1, a speed regulation loop 2 for a washing machine (not shown) comprises a ramp generator 4 having three inputs coupled to receive external analog voltage signals Vdistri-start, Vdistri-end and Vset-speed and an output coupled to a first input of an error amplifier 6 for providing a ramp voltage signal Vramp thereto. The output of the error amplifier 6 is coupled to a pulse generator 8 which switches a triac 10. The triac 10 drives a motor 12 having a tacho generator 14 whose output is coupled to a frequency to voltage converter 16. The output of the frequency to voltage converter 16 represents the actual speed of the motor 12 and is fed to a second input of the error amplifier 6. The operation of the speed regulation loop 2 is well known in the art.

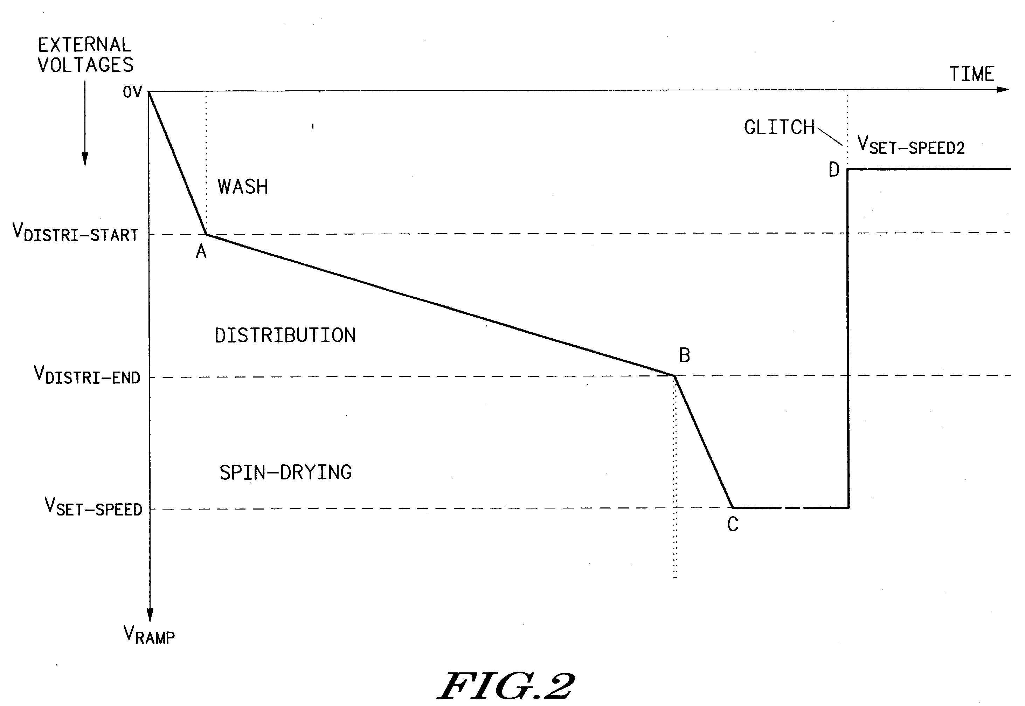

Referring now also to Figure 2, the change in the ramp voltage Vramp with time for the different segments of a washing machine's operation is shown: the wash segment between 0 to A, the distribution segment between A to B, the spin drying segment between B to C and a deceleration from a maximum speed Vset-speed to a lower speed Vset-speed2 between C and D. The three external voltages Vdistri-start, Vdistri-end and Vset-speed define the limits of the segments O-A, A-B and B-C respectively. The segment between C and D consists of a period at a constant maximum speed defined by Vset-speed followed by a deceleration to a speed defined by Vset-speed2.

As discussed in the introduction, the controlled charging and discharging of the capacitor 18 provides the different speeds and acceleration for each segment. The accuracy of the electrolytic capacitor is poor and this is significant when an accurate acceleration is required such as in the distribution segment.

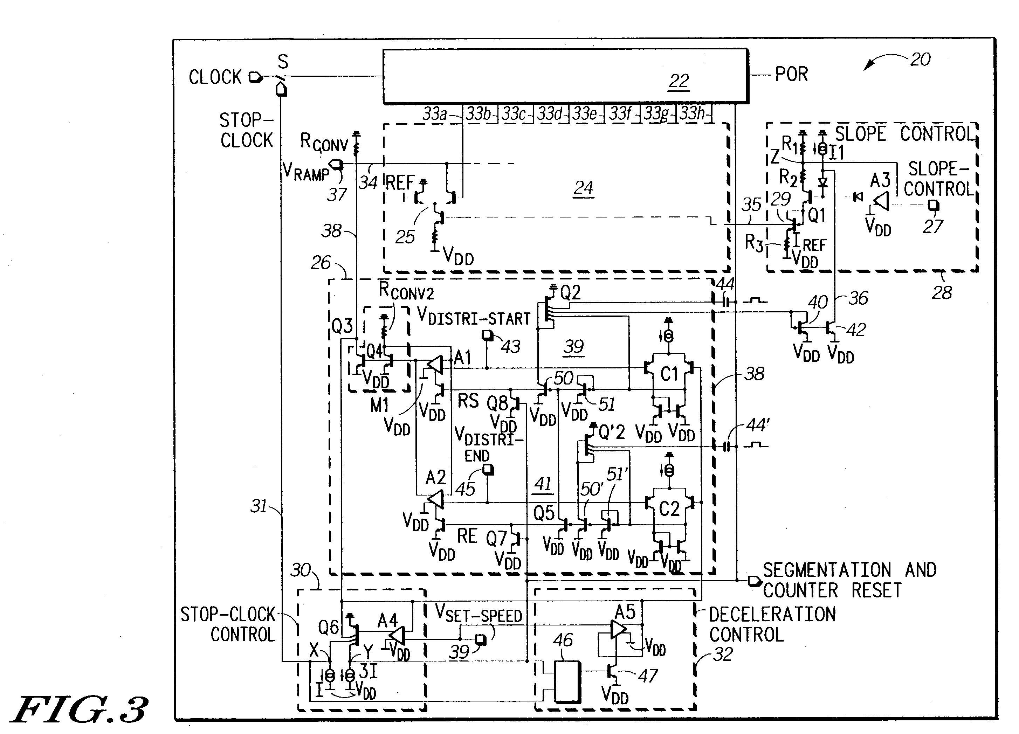

Referring now to Figure 3, a speed control circuit 20 in accordance with a preferred embodiment of the invention for providing the ramp voltage signal Vramp representative of the speed and acceleration comprises a counter 22 which is clocked by a clock signal, such as the 50 Hz mains supply, a digital-to-analog (D/A) converter 24, segment control 26 for controlling the transition from one segment to another, slope control 28 for controlling the slope (i.e. acceleration) of the ramp voltage signal during a segment, stop-clock control 30 for stopping the counter 22 when the ramp voltage signal Vramp reaches a predetermined voltage and deceleration control 32 for detecting and controlling the deceleration phase. In the preferred embodiment the counter 22 is an eight bit counter which is coupled to an eight bit D/A converter 24 via eight lines 33a-h: line 33h corresponds to the LSB.

The counter 22 has two reset inputs: the first is coupled to receive a signal POR which resets the counter 22 at 'power-on' or when Vset-speed is zero, the second is coupled to the segment control 26 which resets the counter 22 at the end of each segment and to the stop-clock control 30.

The D/A converter 24 comprises a plurality of switched current sources, only one 25 of which is shown, coupled to the eight lines 33a-h. The current sources are switched 'on' so as to provide a current on the line 34 depending on the count of the counter 22. A voltage proportional to the current on the line 34 is developed across a resistor Rconv. The voltage developed across resistor Rconv provides the ramp voltage signal Vramp at an output 37 of the speed control circuit 20.

The switched current source 25 comprises a pair of npn differentially coupled transistors. The base of one of the transistors is coupled to the counter 22 via line 33a and receives a '1' corresponding to ground potential or a '0' corresponding to VDD potential, which in the example described herein is about -15V, depending on the counter of the counter 22. The base of the other transistor receives a reference voltage REF.

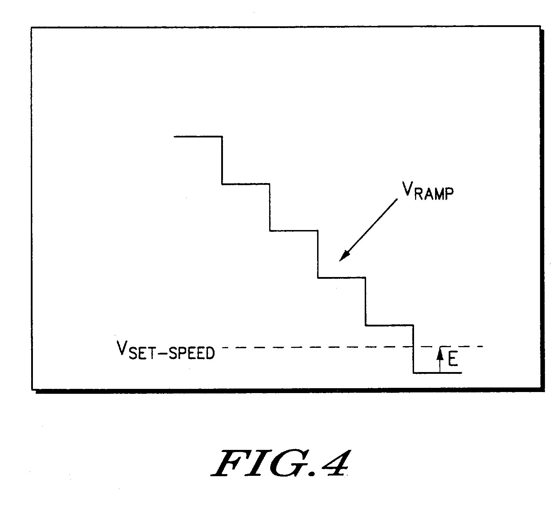

Since the counter is clocked by a 50 Hz signal the current on line 34 and hence the ramp voltage signal Vramp will comprise a series of 20ms steps (Figure 4). The size of the steps, which determines the slope of the ramp signal Vramp and hence corresponds to the rate of acceleration, is determined by the current Iref supplied by the slope control 28 on line 35.

The slope control 28 comprises an analog control loop including an operational amplifier A3, having a first input coupled to receive a voltage signal Vslope-control at a first input terminal 27, a npn transistor Q1 having a base coupled to the output of the operational amplifier A3, a collector coupled to the second input of the operational amplifier A3 and an emitter coupled to line 35 via a diode-coupled npn transistor 29 and a current source I1 coupled to the base of transistor Q1 via a diode.

The value of the current Iref supplied by the slope control 28 is dependent on the state of the analog control loop. The state of the analog control loop is controlled by a signal fed from the segment control 26 to the current source I1 via line 36.

The Vslope-control signal will normally be fixed by the washing machine manufacturer so that there are two different acceleration rates only. This is shown in Figure 2: the segments 0-A and B-C have the same acceleration rate whereas segment A-B has a lower acceleration. A resistive bridge arrangement or a variable potentiometer external to the speed control circuit 20 could be used to change the voltage supplied to the input Vslope-control. The invention will, however, be described in relation to a fixed voltage Vslope-control.

The operation of the slope control 28 will be described in more detail below.

The segment control 26 comprises two comparison circuits 39 and 41. The first comparison circuit 39 comprises a first comparator C1 which has a first input coupled to receive the voltage signal Vdistri-start applied at a second input terminal 43 and a second input coupled to receive the ramp voltage Vramp at the output of the speed control circuit 20 via a line 38. The output of the comparator C1 is coupled via a line RS to a first analog loop comprising a first operational amplifier A1, and a current mirror M1. A first input of the first operational amplifier A1 is coupled to the second input terminal 43 to receive the voltage signal Vdistri-start and a second input is coupled to the input of the current mirror M1. The output of the current mirror is coupled to the resistor Rconv via line 38. The first operational amplifier A1 is enabled according to the signal level on the line RS.

A multi-collector pnp transistor Q2 has a base and first collector coupled to the collector of a npn transistor 50 having a base coupled to the RS line and an emitter tied to the supply line VDD. A second collector of transistor Q2 is coupled to the output of the first comparator C1 and a third collector is coupled to the base and collector of a npn first transistor 40 whose base is coupled to a second npn transistor 42. The emitters of the first 40 and second 42 transistors are coupled to a supply line VDD. The collector of the second transistor 42 is coupled to the line 36 for coupling to the slope control 28. A fourth collector of multi-collector transistor Q2 is coupled via a capacitor 44 to the second reset input of the counter 22. The emitter of the transistor Q2 is tied to a supply line at ground potential.

The second comparison circuit 41 is similar to the first 39 in that it comprises a second comparator C2, a second operational amplifier A2 coupled to the output of the second comparator C2 and to the input of the current mirror M1 and a multi-collector pnp transistor Q2' coupled to the output of the second comparator C2. A first input of the second comparator C2 is coupled to a third input terminal 45 to receive the voltage signal Vdistri-end and a second input of the second comparator C2 is coupled to receive the ramp voltage Vramp via line 38. The output of the second comparator C2 is coupled via a line RE to a second analog loop comprising the second operational amplifier A2, and the current mirror M1. A first input of the second operational amplifier A2 is coupled to the third input terminal 45 to receive the voltage signal Vdistri-end and a second input is coupled to the input of the current mirror M1. The second operational amplifier A2 is enabled according to the signal level on the line RE.

The multi-collector transistor Q2' has a base and first collector coupled to the collector of a npn transistor 50' having a base coupled to the RE line and an emitter tied to the supply line VDD. A second collector of transistor Q2' is coupled to the output of the second comparator C2 and a third collector is coupled via a capacitor 44' to the second reset input of the counter 22. The emitter of the transistor Q2' is tied to ground.

The stop-clock control 30 comprises an operational amplifier A4 having a first input coupled to a fourth input terminal 39 to receive the voltage signal Vset-speed and a second input coupled to receive the ramp voltage Vramp via line 38. The output of the operational amplifier A4 is coupled to a base of a multi-collector pnp transistor Q6. A first collector of transistor Q6 is coupled to the Vramp output of the speed control circuit 20 via line 38. A second collector of transistor Q6 is coupled to a node X and a third collector is coupled to node Y. Node X is coupled to a first current sink I and to a switch S which when open interrupts the clock signal to the counter 22. Node Y is coupled to a second current sink 3I which is 3 times larger than the first current source.

Nodes X and Y are also coupled respectively to first and second inputs of a latch 46 which forms part of the deceleration control 32. The deceleration control further comprises an operational amplifier A5 having a first input coupled to the fourth input terminal 39 to receive the voltage signal Vset-speed and a second input coupled together with the output of the operational amplifier A5 to line 38. The operational amplifier A5 is enabled according to the signal fed from the latch 46 via a npn transistor 47.

Node Y is also coupled to the second reset input of the counter 22 and to the bases of third and fourth npn transistors Q7 and Q8 of the segment control 26. The emitters of the third Q7 and fourth Q8 transistors are coupled to the supply line at VDD. The collector of the third transistor Q7 is coupled to the line RE and the collector of the fourth transistor Q8 is coupled to the line RS.

The operation of the speed control circuit 20 in accordance with the present invention will now be described with reference to Figure 2. The arrangement of the preferred embodiment is such that a decrease in the ramp signal Vramp (i.e. Vramp becomes more negative) corresponds to an increase in speed.

At 'power on' or with Vset-speed equal to zero, the POR input resets the eight bit counter whereby the output voltage signal Vramp is equal to zero. At time t=0 an electromechanical autotimer (not shown) of the washing machine provides a predetermined voltage Vset-speed to the fourth input terminal 39.

During the wash segment, the outputs of the first C1 and second C2 comparators ensure that the lines RS and RE are tied to VDD whereby the first A1 and second A2 operational amplifiers are disabled. Therefore, the only current flowing through Rconv flows from the D/A converter 24 on line 34. Thus, the output Vramp voltage signal depends on the count of the counter 22 and follows the wash segment as shown between points 0-A.

Since line RS is tied to VDD, transistor Q2 and hence first and second transistors 40 and 42 are 'off'. Transistor Q1 is saturated by current source I1 and therefore the analog loop of the slope control 28 is disabled. In this segment, the current Iref supplied to the D/A converter 24, which sets the step size of the Vramp voltage signal for the wash segment 0-A, is given by the following equation.

$$Iref = \frac{VDD - VDi}{R1 + R2 + R3} \qquad (1)$$

Where VDi is the diode voltage drop across diode coupled transistor 29 and R1, R2, R3 are the three resistors coupled in series between the supply terminal at ground and the supply terminal at VDD.

When Vramp reaches the voltage level of the predetermined voltage Vdistri-start (at point A), the first comparator C1 changes state pulling the RS line high which turns 'on' the npn transistors 50 and 51. This produces the following simultaneous effects: the state of the RS line is latched by the second collector of the transistor Q2, the signal on the third collector turns on first and second transistors 40 and 42 whereby the analog loop of the slope control 28 is enabled, the signal on the fourth collector sends a reset pulse to the second reset input of the counter 22 and the first operational amplifier A1 is enabled.

The reset pulse resets the D/A converter 22 such that the current through the resistor Rconv is forced to zero. At the same time, however, the enabled first operational amplifier A1 forces a voltage equal to Vdistri-start across a resistor Rconv2. This is mirrored by M1 so that a voltage Vdistri-start is switched across Rconv (assuming Rconv=Rconv2). Since these two actions are not simultaneous, glitches may appear on the ramp voltage signal Vramp. The latching of the state of the RS line by the second collector of transistor Q2 ensures that the first comparator C1 does not switch states in response to these glitches.

The analog loop of the slope control 28 is enabled as follows. Once the first 40 and second 42 transistors are turned 'on', the second transistor 42 sinks the current sourced by I1, the transistor Q1 is no longer saturated and the operational amplifier A3 pulls the voltage at node Z to the voltage Vslope-control. The current Iref then becomes:

$$Iref = \frac{Vslope\text{-}control}{R1} \qquad (2)$$

Thus, at the beginning of the distribution segment (point A), the step size is changed and is determined by the current Iref defined by equation 2.

During the distribution segment (A-B), the ramp signal Vramp decreases from Vdistri-start according to the count of the counter 22. As Vramp reaches the voltage level of the predetermined voltage Vdistri-end, the second comparison circuit 41 operates in a similar manner to the first comparison circuit 39 described above.

The second comparator C2 changes state pulling the RE line high which turns 'on' the npn transistors 50' and 51'. The state of the RE line is latched by the second collector of the transistor Q2', the signal on the third collector sends a reset pulse to the second reset input of the counter 22 and the second operational amplifier A2 is enabled. As a result, the counter 22 is reset which sets the output voltage from the D/A converter 24 to zero but an analog voltage equal to Vdistri-end is switched across the resistor Rconv.

The npn transistor Q5 has a base connected to the RE line, a collector connected to the RS line and an emitter connected to the supply line VDD. When the RE line is pulled high, transistor Q5 is turned 'on' thereby pulling the RS line to VDD. With the RS line at VDD, transistor Q2 is 'off', as are the first and second transistors 40 and 42 so that transistor Q1 is again saturated. Thus, when Vramp reaches Vdistri-end, the counter 22 is reset, a voltage Vdistri-end is switched across resistor Rconv and the current Iref is defined by equation 1, thus changing the step size (i.e. the slope) of the Vramp signal.

In summary, the ramp signal Vramp in each segment can be represented as follows.

Wash segment (0-A): Vramp = n X Vstepw
Distribution segment (A-B) Vramp = n X Vstepd + Vdistri-start
Spin segment (B-C) Vramp = n X Vsteps + Vdistri-end

where Vstepw, Vstepd and Vsteps are the ramp step voltage for the wash segment the distribution segment and spin segment respectively, Vstepw = Vsteps and n is the count of the counter 22.

As the ramp signal Vramp reaches Vset-speed (at point C) which has been set by the washing machine's electromechanical autotimer, Vramp must be clamped exactly to Vset-speed for loop accuracy. As can be seen from Figure 4, an error overshoot E would otherwise occur due to the steps of the ramp signal before the speed control circuit 20 detected that the predetermined level Vset-speed had been reached. This error E is compensated by the stop-clock control 30 as follows.

When the ramp voltage Vramp reaches Vset-speed, the output of the operational amplifier A4 switches multi-collector transistor Q6 'on' such that the current Ic flowing in its first collector compensates for the step error E. When this compensation current Ic, which also flows in the second and third collectors of the transistor Q6, becomes equal or greater than the current I sunk by the first current sink of the stop clock control, a stop-clock signal at logic high '1' is fed via line 31 to open the switch S. The counter 22 is therefore disabled and Vramp remains equal to Vset-speed until a new voltage dictates acceleration or deceleration. When the compensation current Ic is greater than the current I, a logic high '1' signal is also applied to the first input of latch 46.

The washing machine's electromechanical autotimer, as it progresses through the selected programme, may at a predetermined time (point D), for example in the wash segment, switch the voltage signal Vset-speed to a new value (Vset-speed2 say, where Vset-speed2 < Vset-speed) and thus, selecting a deceleration. This new signal Vset-speed2 is applied to the fourth input terminal 39.

In order to pull the ramp signal Vramp to the new voltage level Vset-speed2, the analog loop, comprising operational amplifier A4 and multi-collector transistor Q6, ensures that the current Ic flowing in the first, second and third collectors increases and when this current Ic is greater than the current 3I sunk by the second current source of the stop-clock control 30, a signal is applied at the second input of the latch 46. With signals applied to the first and second inputs of the latch 46, the output of the latch 46 is set to '1'. This enables the operational amplifier A5. The signal applied to the second input of the latch 46 turns 'on' third Q7 and fourth Q8 transistors which respectively pull the lines RS and RE to VDD and thus, the switched voltages Vdistri-start or Vdistri-end are reset. At the same time, this signal resets the counter 22 via its second reset input.

Thus, all currents in Rconv disappear and so the ramp signal Vramp tends to 0v (from Vset-speed). At the same time, however, the analog loop formed by operational amplifier A5 forces the ramp signal Vramp to Vset-speed2. As a consequence, a glitch to 0v may appear at point D.

When the analog loop comprising operational amplifier A5 forces Vramp = Vset-speed2, the counter is incremented again: since the ramp voltage at the second input of the operational amplifier A4 is equal to or less than the voltage Vset-speed2 at the first input, the output of the operational amplifier turns 'off' multi-collector transistor Q6 so that a signal '0' (corresponding to collector current Ic=0) closes the switch S. Thus, the D/A converter 24 begins to provide a current which increases in steps across the resistor Rconv so that the operational amplifier A5 compensates less and less. The ramp voltage signal Vramp at the output of the speed control circuit 20 is maintained at Vset-speed2. When the D/A converter 24 provides current proportional to Vset-speed2, the compensation by the operational amplifier A5 ceases. As soon as Vramp goes below Vset-speed2, this is detected and compensated for by the analog loop (A4, Q6) of the stop-control 30 as in point C. This analog loop A4, Q6 compensates for the step error E, and sets the stop-clock signal to '1' to open the switch S and to reset the latch 46. On resetting the latch the operational amplifier A5 is disabled. Thus, the deceleration phase is completed and the ramp signal is held at Vset-speed2 until the electromechanical autotimer selects a further acceleration or deceleration.

Thus, the ramp signal Vramp rapidly follows the new speed set by Vset-speed2 and is ready for further acceleration or deceleration.

In summary, the speed control circuit in accordance with the present invention provides digital ramp signals for different segments with different acceleration slopes, the limits of the segments being set by predetermined analog voltages applied to the circuit. The speed control circuit accurately stops the ramp signal at a predetermined set voltage level corresponding to a set speed and in the case of a deceleration command, the ramp signal is directly forced to the new speed while the counter internally recovers the correct state to be ready for further acceleration. Thus, the invention provides a speed control circuit that provides significant improvements in the accuracy of the acceleration since a digital ramp signal is used and also in the flexibility of operation, for example, with the segment limits, the change in acceleration, deceleration etc. Furthermore, the same circuitry can be used for all the different segments.

It will be appreciated that although the invention has been described in relation to a speed regulation loop for a washing machine, the speed control circuit can be used in motor driven applications requiring accurate speed and acceleration control.

It will also be appreciated that the invention may be implemented utilising transistors of opposite conductivity.

**Claims**

1. A speed control circuit for a motor operable at selectable speeds and selectable acceleration rates, the speed control circuit comprising:

   an output node for providing a control signal (Vramp) to be applied to the motor representative of the motor speed and acceleration;
   a clocked counter (22);
   a digital-to-analog (D/A) converter (24) coupled to the counter for providing a signal to the output node which is adjusted in steps in response to the count of the counter;
   step control means (28) coupled to the D/A converter for controlling the size of the steps in response to a step control signal (slope control) applied to an input thereof whereby the step size determines the acceleration rate of the motor; and
   speed control means (26) coupled to the clocked counter and to the output node and having an input for receiving a speed control signal (Vdistri-start, Vdistri-end) having a value corresponding to a predetermined speed, the speed control means being for detecting when the control signal at the output node is equal to the speed control signal, and in response thereto for resetting the clocked counter and for providing a signal representative of the predetermined speed to the output node which is combined thereat with the signal from the digital-to-analog converter.

2. A speed control circuit according to claim 1 wherein said speed control means comprises:

   a first comparator (C1, 39) having a first input coupled to receive the speed control signal representative of a first predetermined speed, a second input coupled to receive the control signal at the output node and an output;
   a first analog loop (M1, A1) having an input coupled to receive the speed control signal (Vdistri-start) and an enable input (RS) coupled to the output of the first comparator, the first comparator switching output states when the control signal at the output node is equal to the speed control signal whereby the first analog loop is enabled to provide the speed control signal to the output node.

3. A speed control circuit according to claim 2 wherein said speed control means further comprises:

   a second comparator (C2, 41) having a first input coupled to receive a second speed control signal (V-distri-end), the second speed control signal representing a second predetermined speed which is greater than the first predetermined speed, a second input coupled to receive the control signal at the output node and an output;
   a second analog loop (A2) having an input coupled to receive the second speed control signal and an enable input (RE) coupled to the output of the second comparator; and
   disable means (Q5) coupled to the output of the second comparator and the enable input of the first analog loop,
   the second comparator switching output states when the control signal at the output node is equal to the second speed control signal whereby the first analog loop is disabled and the second analog loop is enabled to provide the second speed control signal to the output node.

4. A speed control circuit according to claim 2 and 3 wherein the speed control means further comprises:

   first latch means (Q2) coupled to the output of the first comparator for latching the switched output state of the first comparator; and
   second latch means (Q2') coupled to the output of the second comparator for latching the switched output state of the second comparator.

5. A speed control circuit according to claim 3 or 4 wherein the first analog loop comprises a first operational amplifier (A1) having a first input coupled to receive the speed control signal, an enable input coupled to the outputs of the first and second comparators (C1, C2) and a second input coupled to an input of a current mirror (M1) having an output coupled to the output node (37), and wherein the second analog loop comprises a second operational amplifier (A2) having a first input coupled to receive the second speed control signal, an enable input coupled to the output of the second comparator (C2) and a second input coupled to the input of the current mirror (M1).

6. A speed control circuit according to any preceding claim wherein the speed control means further comprises step switch means (Q2, 40, 42) and wherein the step control means comprises an analog loop (A3, 29, $R_1$ -$R_2$) having an input (27) coupled to receive the step control signal, an enable input (36) coupled to the step switch means and an output (35) coupled to the D/A converter, the analog loop being switchable between a first disabled state in which it sets the step size to a first value and a second enabled state in which the analog loop sets the step size to a second value, the step switch means providing a signal to the enable input of the analog loop to switch the analog loop to the second state when the control signal at the output node is equal to the speed control signal.

7. A speed control circuit according to claim 4 and 6 wherein the step switch means and the first latch means comprise a first multi-collector transistor (Q2) having a first collector coupled to the output of the first comparator (C1) for latching the switched output state thereof, a second collector coupled to the enable input of the step control means analog loop, a third collector coupled to a reset input of the clocked counter for resetting the counter.

8. A speed control circuit according to claim 4 or 7 wherein the second latch means comprises a second multi-collector transistor (Q2') having a first collector coupled to the output of the second comparator (C2) for latching the switched output state thereof, and a second collector coupled to the reset input of the clocked counter.

9. A speed control circuit according to any preceding claim further comprising:

clock control means (30) having a first input for receiving a third speed control signal (Vset-speed) representative of a third predetermined speed limit, a second input for receiving the control signal (Vramp) at the output node (37), a first output coupled to the output node (37) and a second output (31) coupled to the clocked counter (22), whereby the clock control means detects when the control signal is equal to the third speed control signal and in response thereto sends a stop clock signal to the counter to disable the counter and maintains the control signal at the output node at the third predetermined speed limit.

10. A speed control circuit according to claim 9 wherein the clock control means comprises:

an operational amplifier (A4) having first and second inputs coupled respectively to the first and second inputs of the clock control means and an output; and
a multi-collector transistor (Q6) having a base coupled to the output of the operational amplifier, a first collector coupled to the output node, a second collector coupled to the clocked counter and a third collector.

11. A speed control circuit according to claim 10 further comprising deceleration control means (32) having a first input coupled to the first input of the clock control means, an enable input coupled to the third collector of the clock control means and an output coupled to the output node (37), a fourth speed control signal representative of a fourth predetermined speed limit which is less than the third predetermined speed limit is applied to the first inputs of the deceleration control means (32) and the clock control means (30) to initiate a deceleration whereby the current flowing in the third collector changes, when the current reaches a predetermined level the deceleration control means is enabled such that the control signal at the output node is pulled to the fourth predetermined speed limit and the clocked counter is enabled.

12. A speed control circuit according to any preceding claim for controlling the speed and acceleration of a washing machine motor having three operating segments, the first segment having a first acceleration rate determined by the disabled state of the step control means analog loop and a first speed limit defined by the first predetermined speed, the second segment having a second acceleration rate determined by the enabled state of the step control means analog loop and a second speed limit defined by the second predetermined speed and the third segment having the first acceleration rate and a third speed limit defined by the third predetermined speed.

13. An analog speed regulation loop for a washing machine motor comprising:

a speed control circuit (4, 20) as claimed in any preceding claim;
an error amplifier (6) having a first input coupled to the output node of the speed control circuit, a second input and an output;
a pulse generator (8) coupled to the output of the error amplifier for driving the motor;
motor speed detection means (10, 12, 14, 16) for detecting the actual speed of the motor and for providing a signal representative of the actual speed to the second input of the error amplifier whereby the error amplifier uses the control signal from the speed control circuit to compensate for errors in the actual speed.

**Patentansprüche**

1. Drehzahlregelkreis für einen mit wählbaren Drehzahlen und wählbaren Beschleunigungsraten betreibbaren Motor, welcher Drehzahlregelkreis umfaßt:

einen Ausgangsknoten zum Schaffen eines für die Motordrehzahl und -beschleunigung repräsentativen Regelsignals (Vramp) zum Anlegen an den Motor;

einen getakteten Zähler (22);

einen mit dem Zähler gekoppelten Digital/Analog-(D/A-)Wandler (24) zum Schaffen eines Signals für den Ausgangsknoten, das stufenweise in Abhängigkeit von dem Zählinhalt des Zählers nachgestellt wird;

mit dem D/A-Wandler gekoppeltes Stufenregelmittel (28) zum Regeln der Stufengröße in Reaktion auf ein an einen Eingang desselben angelegtes Stufenregelsignal (Neigungsregelung), wodurch die Stufengröße die Beschleunigungsrate des Motors bestimmt; und

mit dem getakteten Zähler und dem Ausgangsknoten gekoppeltes Drehzahlregelmittel (26), das einen Eingang zum Empfang eines Drehzahlregelsignals (Vdistri-start, Vdistri-end) mit einem einer vorgegebenen Drehzahl entsprechenden Wert besitzt, wobei das Drehzahlregelmittel vorgesehen ist, um zu erfassen, wenn das Regelsignal am Ausgangsknoten gleich dem Drehzahlregelsignal ist, und in Abhängigkeit davon den getakteten Zähler zurückzustellen und ein für die vorgegebene Drehzahl repräsentatives Signal an den Ausgangsknoten anzulegen, das dort mit dem Signal von dem Digital/Analog-Wandler kombiniert wird.

2. Drehzahlregelkreis nach Anspruch 1, bei dem das Drehzahlregelmittel umfaßt:

einen ersten Komparator (C1, 39) mit einem ersten Eingang, der zum Empfangen des für eine erste vorbestimmte Drehzahl repräsentativen Drehzahlregelsignals angeschlossen ist und mit einem zweiten Eingang, der zum Empfang des Regelsignals mit dem Ausgangsknoten gekoppelt ist, und mit einem Ausgang;

eine erste Analogschleife (M1, A1) mit einem zum Empfang des Drehzahlregelsignals (Vdistri-start) angeschlossenen Eingang und einem mit dem Ausgang des ersten Komparators gekoppelten Freigabeeingang (RS), wobei der erste Komparator Ausgangszustände umschaltet, wenn das Regelsignal an dem Ausgangsknoten gleich dem Drehzahlregelsignal ist, wodurch die erste Analogschleife freigegeben wird, um das Drehzahlregelsignal an den Ausgangsknoten anzulegen.

3. Drehzahlregelkreis nach Anspruch 2, bei dem das Drehzahlregelmittel weiter umfaßt:

einen zweiten Komparator (C2, 41) mit einem ersten zum Empfangen eines zweiten Drehzahlregelsignals (V-distri-end) angeschlossenen Eingang, welches zweite Drehzahlregelsignal eine zweite vorgegebene Drehzahl repräsentiert, die größer als die erste vorgegebene Drehzahl ist, und einen zweiten zum Empfangen des Regelsignals am Ausgangsknoten angeschlossenen Eingang, sowie einen Ausgang;

eine zweite Analogschleife (A2) mit einem zum Empfangen des zweiten Drehzahlregelsignals angeschlossenen Eingang und einem an dem Ausgang des zweiten Komparators angeschlossenen Freigabeeingang (RE); und

mit dem Ausgang des zweiten Komparators und dem Freigabeeingang der ersten Analogschleife gekoppeltes Sperrmittel (Q5),

wobei der zweite Komparator Ausgangszustände umschaltet, wenn das Regelsignal am Ausgangknoten gleich dem zweiten Drehzahlregelsignal ist, wodurch die erste Analogschleife gesperrt und die zweite Analogschleife freigegeben wird, um das zweite Drehzahlregelsignal an den Ausgangsknoten anzulegen.

4. Drehzahlregelkreis nach Anspruch 2 und 3, bei dem das Drehzahlregelmittel weiter umfaßt:

mit dem Ausgang des ersten Komparators zum Verrasten des geschalteten Ausgangszustandes des ersten Komparators gekoppeltes erstes Rastmittel (Q2); und

mit dem Ausgang des zweiten Komparators zum Verrasten des geschalteten Ausgangszustandes des zweiten Komparators gekoppeltes zweites Rastmittel (Q2').

5. Drehzahlregelkreis nach Anspruch 3 oder 4, bei dem die erste Analogschleife umfaßt einen ersten Operationsverstärker (Al) mit einem ersten zum Empfangen des Drehzahlregelsignals angeschlossenen Eingang, einen Freigabeeingang, der mit den Ausgängen des ersten und des zweiten Komparators (C1, C2) gekoppelt ist, und einen zweiten Eingang, der mit dem Eingang eines Stromspiegels (M1) gekoppelt ist, der einen mit dem Ausgangsknoten (37) gekoppelten Ausgang besitzt, und bei dem die zweite Analogschleife einen zweiten Operationsverstärker (A2) umfaßt mit einem ersten zum Empfangen des zweiten Drehzahlregelsignals angeschlossenen Eingang, einem Freigabeeingang, der mit dem Ausgang des zweiten Komparators (C2) gekoppelt ist, und einem zweiten Eingang, der mit dem Eingang des Stromspiegels (M1) gekoppelt ist.

**6.** Drehzahlregelkreis nach einem der vorangehenden Ansprüche, bei dem das Drehzahlregelmittel weiter Stufenschaltermittel (Q2, 40, 42) umfaßt und bei dem das Stufenregelmittel umfaßt eine Analogschleife (A3, 29, $R_1$-$R_2$) mit einem zum Empfangen des Stufenregelsignals angeschlossenen Eingang (27) und einem mit dem Stufenschaltermittel gekoppelten Freigabeeingang (36), und einem mit dem D/A-Wandler gekoppelten Ausgang (35), wobei die Analogschleife schaltbar ist zwischen einem ersten Sperrzustand, in dem sie die Stufengröße auf einen ersten Wert setzt, und einem zweiten freigegebenen Zustand, in dem die Analogschleife die Stufengröße auf einen zweiten Wert setzt, wobei das Stufenschaltermittel ein Signal an den Freigabeeingang der Analogschleife anlegt, um die Analogschleife in den zweiten Zustand zu schalten, wenn das Regelsignal am Ausgangsknoten gleich dem Drehzahlregelsignal ist.

**7.** Drehzahlregelkreis nach Anspruch 4 und 6, bei dem das Stufenschaltermittel und das erste Rastmittel einen ersten Transistor (Q2) mit mehreren Kollektoren umfaßt, der einen mit dem Ausgang des ersten Komparators (C1) gekoppelten ersten Kollektor zum Verrasten des geschalteten Ausgangszustandes desselben besitzt, einen mit dem Freigabeeingang der Stufenregelmittel-Analogschleife gekoppelten zweiten Kollektor, und einen mit einem Rückstelleingang des getakteten Zählers zum Rückstellen des Zählers gekoppelten dritten Kollektor.

**8.** Drehzahlregelkreis nach Anspruch 4 oder 7, bei dem das zweite Rastmittel umfaßt einen zweiten Transistor (Q2') mit mehreren Kollektoren, mit einem ersten mit dem Ausgang des zweiten Komparators (C2) zum Verrasten von dessen geschaltetem Ausgangszustand gekoppelten Kollektor und einem mit dem Rückstelleingang des getakteten Zählers gekoppelten zweiten Kollektor.

**9.** Drehzahlregelkreis nach einem der vorangehenden Ansprüche, der weiter umfaßt:
Taktregelmittel (30) mit einem ersten Eingang zum Empfangen eines für eine dritte vorgegebene Geschwindigkeitsgrenze repräsentativen dritten Drehzahlregelsignals (Vset-speed), einen zweiten Eingang zum Empfangen des Regelsignals (Vramp) an dem Ausgangsknoten (37), einem mit dem Ausgangsknoten (37) gekoppelten ersten Ausgang und einem mit dem getakteten Zähler (22) gekoppelten zweiten Ausgang (31), wodurch das Taktregelmittel erfaßt, wenn das Regelsignal gleich dem dritten Drehzahlregelsignal ist und in Reaktion darauf ein Taktstopsignal an den Zähler schickt, um den Zähler zu sperren, und das Regelsignal am Ausgangsknoten an der dritten vorgegebenen Drehzahlgrenze hält.

**10.** Drehzahlregelkreis nach Anspruch 9, bei dem das Taktregelmittel umfaßt:

einen Operationsverstärker (A4) mit ersten und zweiten Eingängen, die jeweils mit dem ersten bzw. zweiten Eingang des Taktregelmittels gekoppelt sind, und einem Ausgang; und einen Transistor (Q6) mit mehreren Kollektoren, der eine mit dem Ausgang des Operationsverstärkers gekoppelte Basis, einen mit dem Ausgangsknoten gekoppelten ersten Kollektor, einen mit dem getakteten Zähler gekoppelten zweiten Kollektor und einen dritten Kollektor besitzt.

**11.** Drehzahlregelkreis nach Anspruch 10, der weiter umfaßt Abbremsregelmittel (32) mit einem mit dem ersten Eingang des Taktregelmittels gekoppelten ersten Eingang, mit einem mit dem dritten Kollektor des Taktregelmittels gekoppelten Freigabeeingang und mit einem mit dem Ausgangsknoten (37) gekoppelten Ausgang, wobei ein viertes Drehzahlregelsignal, das für eine vierte vorgegebene Drehzahlgrenze repräsentativ ist, die geringer als die dritte vorbestimmte Drehzahlgrenze ist, an die ersten Eingänge des Abbremsregelmittels (32) und des Taktregelmittels (30) angelegt wird, um einen Bremsvorgang einzuleiten, wodurch der in dem dritten Kollektor fließende Strom sich ändert, wenn der Strom einen vorbestimmten Pegel erreicht, das Abbremsregelmittel so freigegeben wird, daß das Regelsignal am Ausgangsknoten auf die vierte vorgegebene Drehzahlgrenze gezogen und der getaktete Zähler freigegeben wird.

**12.** Drehzahlregelkreis nach einem der vorangehenden Ansprüche, zum Regeln der Drehzahl und der Beschleunigung eines Waschmaschinenmotors mit drei Betätigungsabschnitten, von denen der erste Abschnitt eine erste Beschleunigungsrate hat, die durch den gesperrten Zustand der Stufenregelmittel-Analogschleife bestimmt ist, und eine erste Drehzahlgrenze, die durch die erste vorgegebene Drehzahl definiert ist, der zweite Abschnitt eine zweite Beschleunigungsrate besitzt, die durch den freigegebenen Zustand der Stufenregelmittel-Analogschleife bestimmt ist, und eine zweite Drehzahlgrenze, die durch die zweite vorbestimmte Drehzahl definiert ist, und der dritte Abschnitt die erste Beschleunigungsrate und eine dritte Drehzahlgrenze besitzt, die durch die dritte vorbestimmte Drehzahl definiert ist.

**13.** Analoge Drehzahlregelschleife für einen Waschmaschinenmotor, welche umfaßt:

einen Drehzahlregelkreis (4, 20) nach einem der vorangehenden Ansprüche;

einen Fehlerverstärker (6) mit einem ersten mit dem Ausgangsknoten des Drehzahlregelkreises gekoppelten Eingang, einem zweiten Eingang und einem Ausgang;

einen Impulsgenerator (8), der mit dem Ausgang des Fehlerverstärkers zum Antrieb des Motors gekoppelt ist;

Motordrehzahl-Erfassungsmittel (10, 12, 14, 16) zum Erfassen der aktuellen Motordrehzahl und zum Anlegen eines für die tatsächliche Drehzahl repräsentativen Signals an den zweiten Eingang des Fehlerverstärkers, wodurch der Fehlerverstärker das Regelsignal von dem Drehzahlregelkreis benutzt, um Fehler der aktuellen Drehzahl auszugleichen.

## Revendications

1. Circuit de commande de vitesse destiné à un moteur qui peut fonctionner à des vitesses pouvant être sélectionnées et à des taux d'accélération pouvant être sélectionnés, le circuit de commande de vitesse comprenant :

un noeud de sortie servant à produire un signal de commande (Vramp), à appliquer au moteur, qui est représentatif de la vitesse et de l'accélération du moteur ;

un compteur cadencé (22);

un convertisseur numérique-analogique, D/A, (24) qui est couplé au compteur afin de fournir au noeud de sortie un signal qui est ajusté en pas en fonction de la valeur de comptage du compteur ;

un moyen (28) de commande de pas qui est couplé au convertisseur D/A afin de commander la taille des pas en fonction d'un signal de commande de pas (commande de pente) appliqué à une entrée de celui-ci, si bien que la taille des pas détermine le taux d'accélération du moteur ; et

un moyen de commande de vitesse (26) couplé au compteur cadencé et au noeud de sortie et possédant une entrée destinée à recevoir un signal de commande de vitesse (Vdistri-start, Vdistri-end) dont la valeur correspond à une vitesse prédéterminée, le moyen de commande de vitesse étant destiné à déterminer lorsque le signal de commande présent sur le noeud de sortie est égal au signal de commande de vitesse et, en réponse à cela, à repositionner le compteur cadencé et à fournir au noeud de sortie un signal représentatif de la vitesse prédéterminée, lequel y est combiné avec le signal venant du convertisseur numérique-analogique.

2. Circuit de commande de vitesse selon la revendication 1, où ledit moyen de commande de vitesse comprend :

un premier comparateur (C1, 39) qui possède une première entrée couplée de façon à recevoir le signal de commande de vitesse représentatif d'une première vitesse prédéterminée, une deuxième entrée couplée de façon à recevoir le signal de commande présent sur le noeud de sortie, et une sortie ;

une première boucle analogique (M1, A1) qui possède une entrée couplée de façon à recevoir le signal de commande de vitesse (Vdistri-start) et une entrée de validation (RS) couplée à la sortie du premier comparateur, le premier comparateur faisant commuter des états de sortie lorsque le signal de commande présent sur le noeud de sortie est égal au signal de commande de vitesse, de sorte que la première boucle analogique est validée de façon à fournir le signal de commande de vitesse au noeud de sortie.

3. Circuit de commande de vitesse selon la revendication 2, où ledit moyen de commande de vitesse comprend en outre :

un deuxième comparateur (C2, 41) qui possède une première entrée couplée de façon à recevoir un deuxième signal de commande de vitesse (Vdistri-end), le deuxième signal de commande de vitesse représentant une deuxième vitesse prédéterminée qui est supérieure à la première vitesse prédéterminée, une deuxième entrée couplée de façon à recevoir le signal de commande présent sur le noeud de sortie, et une sortie ;

une deuxième boucle analogique (A2) qui possède une entrée couplée de façon à recevoir le deuxième signal de commande de vitesse et une entrée de validation (RE) couplée à la sortie du deuxième comparateur ; et

un moyen d'invalidation (Q5) couplé à la sortie du deuxième comparateur et à l'entrée de validation de la première boucle analogique ;

le deuxième comparateur faisant commuter des états de sortie lorsque le signal de commande présent sur le noeud de sortie est égal au deuxième signal de commande de vitesse, de sorte que la première boucle analogique est invalidée et la deuxième boucle analogique est validée de façon à fournir le deuxième signal de commande de vitesse au noeud de sortie.

4. Circuit de commande de vitesse selon la revendication 3 dépendant de la revendication 2, où le moyen de commande de vitesse comprend en outre :

un premier moyen de verrouillage (Q2) couplé à la sortie du premier comparateur afin de verrouiller l'état de sortie commuté du premier comparateur ; et

un deuxième moyen de verrouillage (Q2') couplé à la sortie du deuxième comparateur afin de verrouiller l'état de sortie commuté du deuxième comparateur.

5. Circuit de commande de vitesse selon la revendication 3 ou 4, où la première boucle analogique comprend un premier amplificateur opérationnel (A1) qui possède une première entrée couplée de façon à recevoir le signal de commande de vitesse, une entrée de validation couplée aux sorties des premier et deuxième comparateurs (C1, C2), et une deuxième entrée couplée à une entrée d'un miroir de courant (M1) dont la sortie est connectée au noeud de sortie (37), et où la deuxième boucle analogique comprend un deuxième amplificateur opérationnel (A2) qui possède une première entrée couplée de façon à recevoir le deuxième signal de commande de vitesse, une entrée de validation couplée à la sortie du deuxième comparateur (C2), et une deuxième entrée couplée à l'entrée du miroir de courant (M1).

6. Circuit de commande de vitesse selon l'une quelconque des revendications précédentes, où le moyen de commande de vitesse comprend en outre un moyen de commutation de pas (Q2, 40, 42) et où le moyen de commande de pas comprend une boucle analogique (A3, 29, $R_1$-$R_2$) qui possède une entrée (27) couplée de façon à recevoir le signal de commande de pas, une entrée de validation (36) couplée au moyen de commutation de pas, et une sortie (35) couplée au convertisseur D/A, la boucle analogique pouvant commuter entre un premier état invalidé dans lequel elle fixe la taille des pas à une première valeur et un deuxième état validé dans lequel la boucle analogique fixe la taille des pas à une deuxième valeur, le moyen de commutation de pas fournissant un signal à l'entrée de validation de la boucle analogique afin de faire commuter la boucle analogique dans le deuxième état lorsque le signal de commande présent sur le noeud de sortie est égal au signal de commande de vitesse.

7. Circuit de commande de vitesse selon la revendication 6 dépendant de la revendication 4, où le moyen de commutation de pas et le premier moyen de verrouillage comprennent un premier transistor multicollecteur (Q2) qui possède un premier collecteur couplé à la sortie du premier comparateur (C1) afin de verrouiller son état de sortie commuté, un deuxième collecteur couplé à l'entrée de validation de la boucle analogique du moyen de commande de pas, et un troisième collecteur couplé à une entrée de repositionnement du compteur cadencé afin de repositionner le compteur.

8. Circuit de commande de vitesse selon la revendication 4 ou 7, où le deuxième moyen de verrouillage comprend un deuxième transistor multicollecteur (Q2') qui possède un premier collecteur couplé à la sortie du deuxième comparateur (C2) afin de verrouiller son état de sortie commuté, et un deuxième collecteur couplé à l'entrée de repositionnement du compteur cadencé.

9. Circuit de commande de vitesse selon l'une quelconque des revendications précédentes, comprenant en outre :

un moyen (30) de commande d'horloge qui possède une première entrée destinée à recevoir un troisième signal de commande de vitesse (Vset-speed) représentatif d'une troisième limite de vitesse prédéterminée, une deuxième entrée destinée à recevoir le signal de commande (Vramp) présent sur le noeud de sortie (37), une première sortie couplée au noeud de sortie (37), et une deuxième sortie (31) couplée au compteur cadencé (22), de sorte que le moyen de commande d'horloge détermine lorsque le signal de commande est égal au troisième signal de commande de vitesse et, en réponse à cela, envoie un signal d'horloge d'arrêt au compteur afin d'invalider le compteur et maintient le signal de commande présent sur le noeud de sortie à la troisième limite de vitesse prédéterminée.

10. Circuit de commande de vitesse selon la revendication 9, où le moyen de commande d'horloge comprend :

un amplificateur opérationnel (A4) qui possède des première et deuxième entrées respectivement couplées aux première et deuxième entrées du moyen de commande d'horloge, et une sortie ; et

un transistor multicollecteur (Q6) qui possède une base couplée à la sortie de l'amplificateur opérationnel, un premier collecteur couplé au noeud de sortie, un deuxième collecteur couplé au compteur cadencé, et un troisième collecteur.

11. Circuit de commande de vitesse selon la revendication 10, comprenant en outre un moyen de commande de décélération (32) qui possède une première entrée couplée à la première entrée du moyen de commande d'horloge, une entrée de validation couplée au troisième collecteur du moyen de commande d'horloge, et une sortie couplée au noeud de sortie (37), où un quatrième signal de commande de vitesse représentatif d'une quatrième limite de vitesse prédéterminée, qui est inférieure à la troisième limite de vitesse prédéterminée, est appliqué aux premières entrées du moyen de commande de décélération (32) et du moyen de commande d'horloge (30) afin de faire commencer une décélération, de sorte que le courant passant dans le troisième collecteur varie, et où, lorsque le courant atteint un niveau prédéterminé, le moyen de commande de décélération est validé de sorte que le signal de commande présent sur le noeud de sortie est tiré jusqu'à la quatrième limite de vitesse prédéterminée et le compteur cadencé est validé.

12. Circuit de commande de vitesse selon l'une quelconque des revendications précédentes, destiné à commander la vitesse et l'accélération d'un moteur de machine à laver possédant trois segments de fonctionnement, le premier segment ayant un premier taux d'accélération déterminé par l'état invalidé de la boucle analogique du moyen de commande de pas et une première limite de vitesse définie par la première vitesse prédéterminée, le deuxième segment ayant un deuxième taux d'accélération déterminé par l'état validé de la boucle analogique du moyen de commande de pas et une deuxième limite de vitesse définie par la deuxième vitesse prédéterminée, et le troisième segment ayant le premier taux d'accélération et une troisième limite de vitesse définie par la troisième vitesse prédéterminée.

13. Boucle de régulation de vitesse analogique pour moteur de machine à laver, comprenant :

> un circuit de commande de vitesse (4, 20) selon l'une quelconque des revendications précédentes ;
> un amplificateur d'erreur (6) qui possède une première entrée couplée au noeud de sortie du circuit de commande de vitesse, une deuxième entrée et une sortie ;
> un générateur d'impulsions (8) couplé à la sortie de l'amplificateur d'erreur afin d'exciter le moteur ;
> un moyen (10, 12, 14, 16) de détection de vitesse du moteur, qui sert à détecter la vitesse réelle du moteur et à fournir un signal représentatif de la vitesse réelle à la deuxième entrée de l'amplificateur d'erreur, de sorte que l'amplificateur d'erreur utilise le signal de commande venant du circuit de commande de vitesse pour compenser les erreurs présentes dans la vitesse réelle.

*FIG.1*

14

FIG.2

FIG.3

EP 0 551 627 B1

FIG.4